# EUROPÄISCHE PATENTSCHRIFT

(11) **EP 2 607 175 B1**
(45) Veröffentlichungstag und Bekanntmachung des Hinweises auf die Patenterteilung: **16.07.2014**
(21) Anmeldenummer: 12007644.3
(22) Anmeldetag: 12.11.2012
(51) Int. Cl.: B60R 9/10, B60R 9/06

(54) **Lastenträger mit an einem Grundträger beweglich gelagerten Lasttragteilen**
Load support with mobile load bearing parts mounted on a base support
Support de charge avec pièces porte-charge stockées en mouvement sur un support de base

(30) Priorität: 23.12.2011 DE 102011122285
(43) Veröffentlichungstag der Anmeldung: 26.06.2013
(60) Teilanmeldung: 14001597.5
(73) Patentinhaber: WESTFALIA - Automotive GmbH, 33378 Rheda-Wiedenbrück (DE)
(72) Erfinder: Söffge, Friedhelm, D-71229 Leonberg (DE)
(74) Vertreter: Bregenzer, Michael

(56) Entgegenhaltungen:
- EP-A2- 1 995 119
- EP-A2- 2 014 510
- DE-A1- 10 144 550
- DE-A1-102007 039 180
- DE-A1-102009 016 534

## Beschreibung

Die Erfindung betrifft einen Lastenträger für ein Kraftfahrzeug, insbesondere einen Personenkraftwagen, mit einem zum Tragen einer Last vorgesehenen Grundträger, der bei Gebrauch des Lastenträgers nach hinten vor einen Heckbereich des Kraftfahrzeugs vorsteht, wobei an dem Grundträger mindestens zwei eine Längserstreckungsrichtung aufweisende Lasttragteile, insbesondere in Gestalt von langgestreckten Fahrradträgerteilen zum Abstellen eines Fahrrads, ein Lasttragteilpaar bilden, wobei die Lasttragteile jeweils einen Tragabschnitt und einen Lagerabschnitt aufweisen, wobei die Lasttragteile mit ihren Lagerabschnitten an dem Grundträger in einem Querabstand zueinander mittels Schwenklagern schwenkbar zwischen einer Nichtgebrauchsstellung, in der die Lasttragteile in einen in dem Querabstand vorhandenen Aufbewahrungsraum geschwenkt sind, und einer Gebrauchsstellung gelagert sind, in der die Lasttragteile aus dem Aufbewahrungsraum zur Vergrößerung des Ladebereichs heraus geschwenkt sind.

Ein derartiger Lastenträger ist z.B. in DE 10 2007 023 495 A1 oder EP 2 014 510 A2 erläutert.

Bei dem bekannten Lastenträger sind die Lasttragteile in Gestalt von Fahrradträgerteilen bzw. Fahrrad-Trägerrinnen ausgestaltet. Die Lasttragteile sind an rohrartigen Längsträgern drehbar und verschieblich gelagert, so dass sie zwischen einer nach außen vor die Längsträger vorstehenden Gebrauchsstellung und einer Nichtgebrauchsstellung verstellbar sind, in der sich die Lasttragteile zwischen den Längsträgern befinden. Beispielsweise können die so beweglich gelagerten Lasttragteile aufeinandergelegt werden, was an sich Platz sparend ist. Wenn jedoch die Lasttragteile relativ großvolumig sind, Anbauteile an Lasttragteilen vorhanden sind und dergleichen mehr, können sie nicht mehr aufeinandergelegt werden.

Es ist daher die Aufgabe der vorliegenden Erfindung, einen Lastenträger bereitzustellen, bei dem die beweglich gelagerten Lasttragteile möglichst günstig in einem Aufbewahrungsraum bei Nichtgebrauch untergebracht werden können.

Zur Lösung der Aufgabe ist bei einem Lastenträger der eingangs genannten Art vorgesehen, dass der Tragabschnitt mindestens eines der Lasttragteile in der Nichtgebrauchsstellung in dem Aufbewahrungsraum in einer Schräglage bezüglich der Gebrauchsstellung angeordnet ist und in seiner Längserstreckungsrichtung in einer Nichtgebrauchsstellungsachse orientiert ist, die um einen Schrägstellwinkel gegenüber einer Gebrauchsstellungsachse winkelig ist, in der die Längserstreckungsrichtung des Tragabschnitts in der Gebrauchsstellung orientiert ist.

Der Tragabschnitt mindestens eines der Lasttragteile ist in der Nichtgebrauchsstellung in dem Aufbewahrungsraum in einer Schräglage bezüglich der Gebrauchsstellung angeordnet und verläuft vorteilhaft entlang einer Nichtgebrauchsstellungsachse, die gegenüber einer Gebrauchsstellungsachse um einen Schrägstellwinkel winkelig ist, entlang derer der Tragabschnitt in der Gebrauchsstellung verläuft.

Die Erfindung betrifft also auch einen Lastenträger für ein Kraftfahrzeug, insbesondere einen Personenkraftwagen, mit einem zum Tragen einer Last vorgesehenen Grundträger, der bei Gebrauch des Lastenträgers nach hinten vor einen Heckbereich des Kraftfahrzeugs vorsteht, wobei an dem Grundträger mindestens zwei aufweisende Lasttragteile, insbesondere in Gestalt von langgestreckten Fahrradträgerteilen zum Abstellen eines Fahrrads, ein Lasttragteilpaar bilden, wobei die Lasttragteile jeweils einen sich entlang einer Längsachse erstreckenden, eine Längsgestalt aufweisenden Tragabschnitt und einen Lagerabschnitt aufweisen, wobei die Lasttragteile mit ihren Lagerabschnitten an dem Grundträger in einem Querabstand zueinander mittels Schwenklagern schwenkbar zwischen einer Nichtgebrauchsstellung, in der die Lasttragteile in einen in dem Querabstand vorhandenen Aufbewahrungsraum geschwenkt sind, und einer Gebrauchsstellung gelagert sind, in der die Lasttragteile aus dem Aufbewahrungsraum zur Vergrößerung des Ladebereichs heraus geschwenkt sind und sich die Tragabschnitte eines jeweiligen Lasttragteilpaars, insbesondere miteinander fluchtend, entlang einer Querachse erstrecken. Es ist vorgesehen, dass der Tragabschnitt mindestens eines der Lasttragteile in der Nichtgebrauchsstellung in dem Aufbewahrungsraum in einer Schräglage angeordnet ist, in der seine Längsachse in einem schrägen Winkel zu der Querachse verläuft.

Der schräge Winkel ist zweckmäßigerweise spitzwinkelig oder flachwinkelig, z.B. etwa 5 bis 15 Grad. Das oder die Schwenklager haben zweckmäßigerweise nur eine einzige, insbesondere schräge Schwenkachse, wobei auch Lager mit mehreren, zueinander parallelen oder winkeligen Schwenkachsen und/oder kombinierte Schwenk-Schiebelager oder dergleichen möglich sind.

Die Nichtgebrauchsstellungsachse und/oder die Gebrauchsstellungsachse verlaufen zweckmäßigerweise etwa in einer horizontalen Ebene. Es versteht sich jedoch, dass selbstverständlich auch eine oder beide dieser Achsen raumschräg sein können. Weiterhin ist es vorteilhaft, wenn die Schwenkachse des Schwenklagers, das das Lastentragteil schwenkbar lagert, etwa in einer horizontalen Ebene oder insgesamt horizontal verläuft (bei Gebrauch des Lastenträgers bzw. in der am Kraftfahrzeug montierten Stellung). Es ist aber auch möglich, dass die Schwenkachse raumschräg ist, d.h. beispielsweise schräg zu einer horizontalen Ebene und/oder schräg zu einer Vertikalebene (ebenfalls bezogen auf den normalen Gebrauch des Lastenträgers).

Es ist ein Grundgedanke der vorliegenden Erfindung, dass eines oder mehrere Lasttragteile so in dem Aufbewahrungsraum zu liegen kommen, dass die Längsachsen ihrer Tragabschnitte in der Nichtgebrauchsstellung schrägwinkelig zur Ausrichtung der Längsachse des Tragabschnitts in der Gebrauchsstellung verläuft, die der Gebrauchsstellungsachse des Tragabschnitts entspricht. Dabei ist es möglich, dass nur eines der Lasttragteile quasi schräg zu einer die Lasttragteile in der Gebrauchsstellung durchsetzenden Querachse schwenkbar gelagert ist. Bevorzugt ist jedoch, dass beide Lasttragteile eines jeweiligen Lasttragteilpaars in eine Schräglage bezüglich der die Lasttragteile in der Gebrauchsstellung durchsetzenden Querachse oder der Gebrauchsstellungsachsen der Tragabschnitte verschwenkbar sind, wenn die Lasttragteile von der Gebrauchsstellung in die Nichtgebrauchsstellung verstellt werden.

Die Schwenkachse mindestens eines Schwenklagers verläuft beispielsweise in einem Winkel von mehr als 90°, z.B. 95 bis 105 Grad zu der Gebrauchsstellungsachse. Üblich ist es, wie zum Beispiel auch bei dem Lastenträger gemäß DE 10 2007 023 495 A1 der Fall ist, das die Schwenkachse des Schwenklagers für das Lasttragteil senkrecht zur Querachse oder auch zur Längsachse des Tragabschnitts verläuft, wenn dieser in der Gebrauchsstellung steht.

Die Tragabschnitte der Lasttragteile eines Lasttragteilpaars kommen in der Nichtgebrauchsstellung zweckmäßigerweise nebeneinander in dem Aufbewahrungsraum zu liegen. Dabei ist es möglich, dass die Tragabschnitte in einem Winkel zueinander stehen. Besonders bevorzugt ist es, wenn die Tragabschnitte parallel nebeneinander in dem Aufbewahrungsraum liegen, wenn sich die Lasttragteile in der Nichtgebrauchsstellung befinden.

Die Lasttragteile eines Lasttragteilpaars befinden sich in der Nichtgebrauchsstellung zweckmäßigerweise etwa in einer gleichen Ebene, d.h. dass beispielsweise weder das eine noch das andere Lasttragteil über diese Ebene nach oben oder unten vorsteht. Dadurch baut der Lastenträger besonders kompakt, wenn er sozusagen zusammengefaltet ist, also seine Nichtgebrauchsstellung einnimmt.

Eine andere Ausführungsform kann vorsehen, dass sich die Tragabschnitte der Lasttragteile eines Lasttragteilpaars in der Nichtgebrauchsstellung in dem Aufbewahrungsraum überkreuzen.

Die Schwenkachsen der Lasttragteile verlaufen zweckmäßigerweise parallel zueinander. Weiterhin ist es vorteilhaft, wenn eine Längsposition von Achselementen der Schwenklager, die die Schwenkachsen definieren, insbesondere eine Längsposition der Längsenden der Achselemente, quer zu der Querachse oder der Gebrauchsstellungsachse des Tragabschnitts zumindest im Wesentlichen gleich ist. In Längsrichtung liegen also die Achselemente quasi auf derselben Höhe. Das ermöglicht eine besonders Platz sparende Unterbringung der Lasttragteile in der Nichtgebrauchsstellung.

Der Grundträger kann beispielsweise als eine Schublade, eine Wanne oder dergleichen ausgestaltet sein. Auch bei dieser Bauform ist es möglich, dass der Grundträger beispielsweise Längsträger umfasst, beispielsweise Verstärkungen der Wanne, der Schublade oder dergleichen.

Eine besonders bevorzugte Ausführungsform der Erfindung sieht vor, dass der Grundträger als ein Ladegestell ausgestaltet ist und die Schwenklager der Lasttragteile an insbesondere parallel nebeneinander verlaufenden, den Aufbewahrungsraum seitlich begrenzenden Längsträgern angeordnet sind.

Längsachsen der Längsträger verlaufen zweckmäßigerweise parallel zueinander. Die Längsachsen der Längsträger verlaufen zweckmäßigerweise rechtwinkelig quer zu der Querachse oder der Gebrauchsstellungsachse des Tragabschnitts.

Die Längsachsen der Längsträger verlaufen weiterhin vorteilhaft zu einer Fahrzeuglängsrichtung des Kraftfahrzeugs bei Gebrauch des Lastenträgers an dem Kraftfahrzeug parallel. Mithin stehen die Längsträger vorteilhaft in der Art von Gabelarmen nach hinten vor das Heck des Kraftfahrzeugs vor.

Eine die Lasttragteile in der Gebrauchsstellung durchsetzende Querachse oder die Gebrauchsstellungsachse des Tragabschnitts verläuft vorteilhaft in Querrichtung bezüglich des Kraftfahrzeugs, wenn der Lastenträger am Kraftfahrzeug seine Gebrauchsstellung einnimmt.

Eine bevorzugte Auführungsform stellt es dar, wenn ein Lastenträger gemäß Oberbegriff des Anspruches 1 dadurch gekennzeichnet ist, dass er eine Verriegelungseinrichtung zur Verriegelung mindestens eines Lasttragteils an dem Grundträger in der Gebrauchsstellung und/oder Nichtgebrauchsstellung aufweist.

Somit kann also das Lasttragteil in zumindest einer dieser Stellungen festgelegt werden, so dass er beispielsweise sich nicht mehr bewegen kann, wenn das Kraftfahrzeug fährt. Das verbessert insgesamt den Halt der Last am Grundträger und somit am Kraftfahrzeug.

Es versteht sich, dass der Begriff "Verriegelungseinrichtung" relativ weit zu verstehen ist, d.h. er kann beispielsweise auch eine Spanneinrichtung umfassen oder eine Klemmeinrichtung, mit der das Lasttragteil in der Gebrauchsstellung oder der Nichtgebrauchsstellung oder beiden Stellungen bezüglich des Grundträgers festlegbar ist.

Die Verriegelungseinrichtung umfasst zweckmäßigerweise ein in Richtung seiner das Lasttragteil bezüglich des Grundträgers verriegelnden Verriegelungsstellung federbelastetes Riegelelement. Selbsverständlich wäre es möglich, ein Riegelelement auch manuell in Richtung der Verriegelungsstellung zu Verstellen. Bevorzugt ist jedoch eine federbelastete Verriegelung. Beispielsweise drückt ein Federelement auf das Riegelelement.

Das Riegelelement kann in einer Ausführungsform, die in der Zeichnung nicht dargestellt ist, beispielsweise am Grundträger beweglich gelagert sein. Eine bevorzugte Ausführungsform sieht jedoch vor, dass das Bedienelement (es können auch mehrere vorgesehen sein) am Lasttragteil beweglich gelagert ist.

Der Grundträger seinerseits kann vorteilhaft an einem Tragegestell schwenkbar gelagert sein, beispielsweise einem Tragegestell, das an einer Anhängekupplung befestigbar ist, beispielsweise deren Kugelkopf, aber auch an einem Tragegestell, das beispielsweise an einer aus einem Heck des Kraftfahrzeugs ausziehbaren Schublade angeordnet ist.

Vorteilhaft ist vorgesehen dass, an dem Tragabschnitt ein Stützelement zum Abstützen der Last, insbesondere eines Rades eines Fahrrades, mittels einer Führungseinrichtung entlang der Längsachsrichtung verschieblich geführt ist, so dass das Stützelement in eine zum Abstützen der Last geeignete Längsposition entlang der Längsachsrichtung verstellbar ist.

Das Stützelement ist zweckmäßigerweise in der jeweiligen Längsposition festlegbar, wofür eine Halteeinrichtung zweckmäßig ist. Die Halteeinrichtung umfasst beispielsweise eine Rasteinrichtung, eine Riegeleinrichtung, eine Klemmeinrichtung oder dergleichen. Dementsprechend ist es zweckmäßig, mindestens eine Raste und/oder mindestens einen Riegel und/oder mindestens eine Klemme vorzusehen. Es versteht sich, dass beliebige Kombinationen möglich sind, so dass beispielsweise das Stützelement zunächst mittels eines Riegels oder einer Raste festgelegt wird, anschließend noch zusätzlich verklemmt, was den Halt verbessert.

Die mindestens eine Raste, der Riegel, die Klemme oder dergleichen ist zweckmäßigerweise in eine das Stützelement bezüglich des Tragabschnitts festlegende Rastposition bzw. Verriegelungsposition oder Klemmenposition federbelastet. Beispielsweise ist eine Schenkelfeder vorgesehen, um die Raste oder den Riegel zu betätigen. Weiterhin ist es vorteilhaft, wenn der Riegel oder die Raste eine Bedienhandhabe zur manuellen Bedienung, beispielsweise zum Verriegeln oder auch zum Entriegeln, aufweist.

Selbstverständlich kann der Riegel, die Raste oder die Klemme am Lasttragteil oder, was bevorzugt ist, am Stützelement angeordnet sein.

Zur Aufnahme der Raste oder des Riegels ist zweckmäßigerweise eine Aufnahmekontur, beispielsweise eine Rastkontur oder eine Riegelaufnahme, vorgesehen.

Die Halteeinrichtung umfasst zweckmäßigerweise mindestens eine Zahnschiene oder Zahnreihe zur Verrastung mit der Raste. Somit ist eine große Anzahl von Verriegelungsposition oder Rastpositionen möglich.

Die Zahnschiene oder Zahnreihe könnte zwar prinzipiell an dem Stützelement angeordnet sein. Bevorzugt ist jedoch eine Ausführungsform, bei der die Zahnschiene oder Zahnreihe an dem Lasttragteil angeordnet ist. Besonders bevorzugt befindet sich die Zahnschiene oder Zahnreihe zwischen zwei Führungskonturen der Führungseinrichtung, an denen das Stützelement bzw. der Stützkörper geführt ist.

Die Zahnung ist beispielsweise in der Art einer Zahnschiene oder Zahnreihe ausgestaltet.

Die Zahnung umfasst beispielsweise eine Sägezahnstruktur. Die Sägezahnstruktur ist so orientiert, das eine Raste mit der Zahnung bei einem Verstellen des Stützelements in einem Sinne von der Last weg mit der Zahnung selbsttätig verrastet, beispielsweise aufgrund einer Federbelastung. In umgekehrter Richtung hingegen, das heißt wenn das Stützelement zur Last hin bewegt wird, gleitet die Raste über die Zahnung weg. Somit kann der Bediener das Stützelement durch eine einfache Bedienungshandlung in Richtung der Last, beispielsweise die Rückseite eines Rades, schieben. Das Stützelement bleibt von selbst in der jeweiligen Längsposition, da die Raste selbsttätig mit der Zahnung verrastet.

Das Stützelement ist zweckmäßigerweise als eine Art Stützkeil ausgestaltet oder umfasst einen Stützkeil.

Der Tragabschnitt umfasst zweckmäßigerweise eine Tragabschnitt-Stützfläche, während das Stützelement eine Stützelement-Stützfläche aufweist. Die beiden Stützflächen sind zweckmäßigerweise insgesamt oder insbesondere in einem Bereich, in dem sie aneinander angrenzen, schräg geneigt. Die Stützflächen weisen also vorteilhaft als Ganzes oder zumindest abschnittsweise eine Schrägneigung relativ zueinander auf. Die Stützflächen können plane Flächen sein, aber auch Rundungen aufweisen.

Das mindestens eine Lasttragteil weist vorteilhaft eine Rinne zur Aufnahme der Last, beispielsweise eines Rades eines Fahrrades, auf. Von einem Rinnenboden stehen dann Seitenschenkel ab, beispielsweise in der Gebrauchsstellung des Lasttragteils nach oben. Somit ist eine Art Mulde gebildet, die die Last sicher aufnimmt.

Die Seitenschenkel der Rinne des Lasttragteils bilden zweckmäßigerweise Führungskonturen der Führungseinrichtung.

Auch das Stützelement hat zweckmäßigerweise eine Rinne oder eine Aufnahmemulde. Diese Aufnahmemulde ist zweckmäßigerweise aus gerundet derart, dass ein Außenumfang eines Rades etwa in diesen Innenumfang der Aufnahmemulde passt. Die Aufnahmemulde ist also in einer Ebene, in der die Längsachse des Lasttragteils liegt, vorteilhaft rund.

Ein Boden der Aufnahmemulde des Stützelements und der Rinnenboden des Lasttragteils fluchten zweckmäßigerweise miteinander. Somit ist also eine Abstützung der Last in einer im Wesentlichen horizontalen Ebene durch den Rinnenboden gegeben. Schräg dazu verläuft vorteilhaft die Stützfläche des Stützelements, beispielsweise der Boden der Aufnahmemulde. Die Anordnung ist zweckmäßigerweise so getroffen, dass die Bodenflächen des Rinnenboden und der Aufnahmemulde des Stützteils oder Stützelements kontinuierlich ineinander übergehen.

Das Lasttragteil weist zweckmäßigerweise ein Spannelement, zum Beispiel einen Riemen, insbesondere einen Zahnriemen mit einer Raste, zum Spannen der Last in einem Sinne zu dem Stützelement hin auf. Selbstverständlich kann ein derartiges Spannelement auch am Grundträger angeordnet sein und sich bis zum Lasttragteil bzw. der darauf anordenbaren Last erstrecken.

Der erfindungsgemäße Lastenträger kann als eine vom Kraftfahrzeug lösbare Komponente, beispielsweise an der Anhängekupplung befestigbare Baueinheit mit einer Klemmvorrichtung oder einer sonstigen Halteeinrichtung zum Halten an der Anhängekupplung ausgestaltet sein, aber auch einen Bestandteil eines Kraftfahrzeugs bilden, beispielsweise als eine Heckschublade ausgestaltet sein kann, die aus einem Aufnahmeraum am Heck des Kraftfahrzeugs ausziehbar ist.

Selbstverständlich kann ein erfindungsgemäßer Lastenträger auch weitere Komponenten enthalten, beispielsweise einen Haltebügel oder Stützbügel zum stützen der Last, Spannelemente, insbesondere Gurte und dergleichen. Ferner ist es vorteilhaft, wenn der Lastenträger mindestens eine Leuchtenanordnung, einen Kennzeichenträger und dergleichen mehr umfasst.
- Figur 1: eine seitliche perspektivische Schrägansicht eines mit einem Fahrrad beladenen erfindungsgemäßen Lastenträgers,

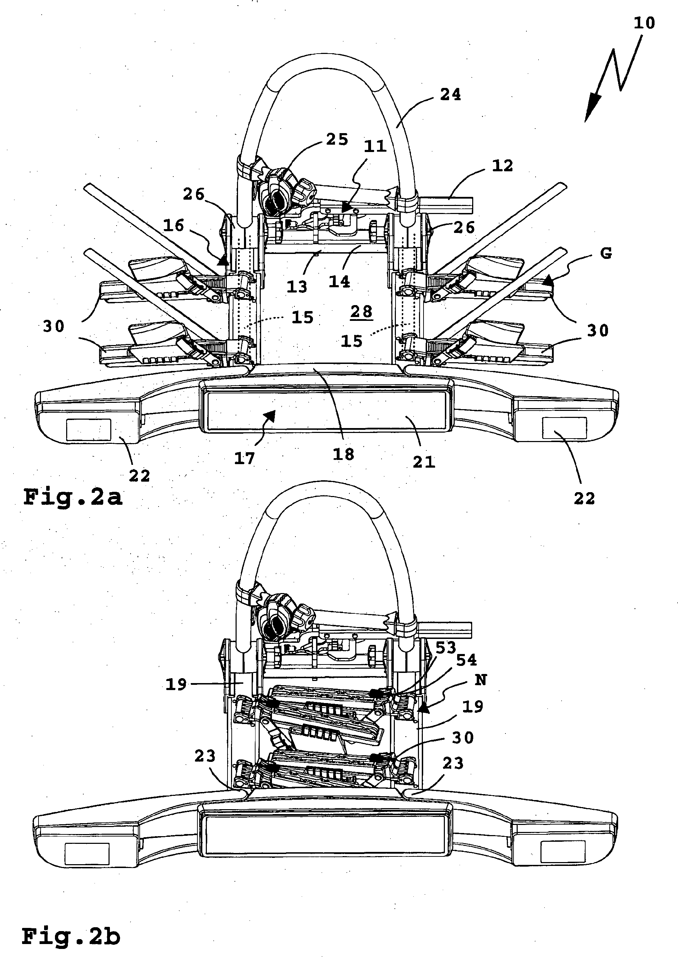

- Figur 2a: eine Schrägansicht von hinten oben auf den Lastenträger gemäß Figur 1, wobei dessen Lasttragteile eine Gebrauchsstellung einnehmen,
- Figur 2b: den Lastenträger gemäß Figur 2a mit in eine Nichtgebrauchsstellung verstellten Lasttragteile,
- Figur 3a: den Lastenträger gemäß Figur 2a senkrecht von oben,
- Figur 3b: den Lastenträger gemäß Figur 2b von oben,

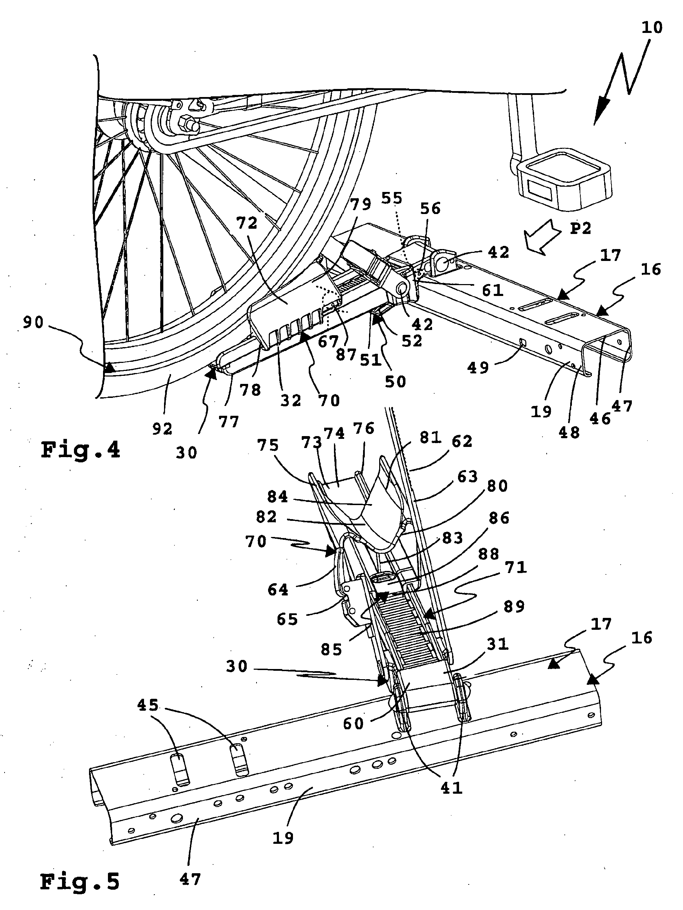

- Figur 4: eine Detailansicht eines Lasttragteils sowie eines Stützelements des Lastenträgers gemäß der vorstehenden Figuren etwa entsprechend einem Ausschnitt A in Figur 1 in einer Blickrichtung entsprechend einem Pfeil P1, und
- Figur 5: eine weitere Detailansicht ähnlich derjenigen in Figur 4, jedoch in Blickrichtung eines Pfeils P2 in Figur 4.

Ein in der Zeichnung dargestellter Lastenträger 10 ist mittels einer Halteeinrichtung 11, beispielsweise einer Klemmeinrichtung, an einer Anhängekupplung 101 eines Kraftfahrzeugs 100 lösbar befestigbar.

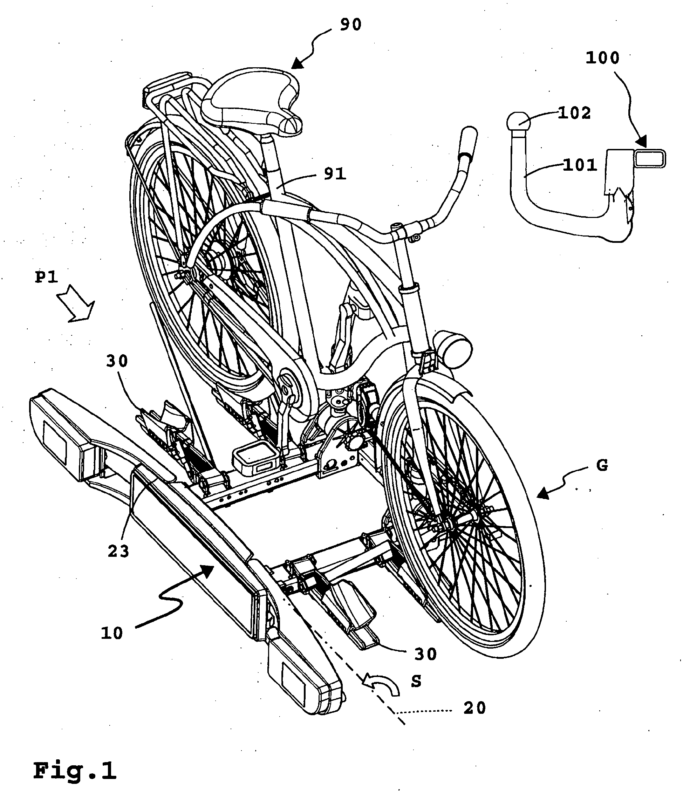

Die Halteeinrichtung 11 umfasst beispielsweise ein Klemmteil 27, das mittels eines Hebels 12 in eine einen Kugelkopf 102 oder ein sonstiges Kuppelelement der Anhängekupplung 101 klemmende Klemmstellung gebracht wird. Das Kraftfahrzeug 100 ist in Figur 1 schematisch dargestellt, wobei jedoch der Lastenträger 10 nicht am Kraftfahrzeug 100 befestigt ist.

Der Lastenträger 10 umfasst ein Grundgestell 13, an dem die Halteeinrichtung 11 angeordnet ist. Das Grundgestell 13 ist vorzugsweise U-förmig und hat einen Grundschenkel 14, von dem zwei Tragarme 15 abstehen. Das Grundgestell 13 trägt ein Ladegestell 16, das einen Grundträger 17 bildet.

Das Ladegestell 16 ist ebenfalls U-förmig und hat einen Grundschenkel 18, von dem 2 Längsträger 19 abstehen. Die Längsträger 19 liegen beim Fahrbetrieb des Lastenträgers 10 auf den Tragarmen 15 auf.

Das Ladegestell 16 ist jedoch am Grundgestell 13 in Richtung einer zum Öffnen beispielsweise einer Kofferraumklappe des Kraftfahrzeugs 100 geeigneten Ladestellung beweglich gelagert, beispielsweise schiebebeweglich und/oder schwenkbeweglich, zum Beispiel entsprechend einem Pfeil S. Beispielsweise ist ein Schwenklager im Bereich der freien Enden der Tragarme 15 und dem Grundschenkel 18 vorgesehen, dessen Schwenkachse 20 exemplarisch eingezeichnet ist.

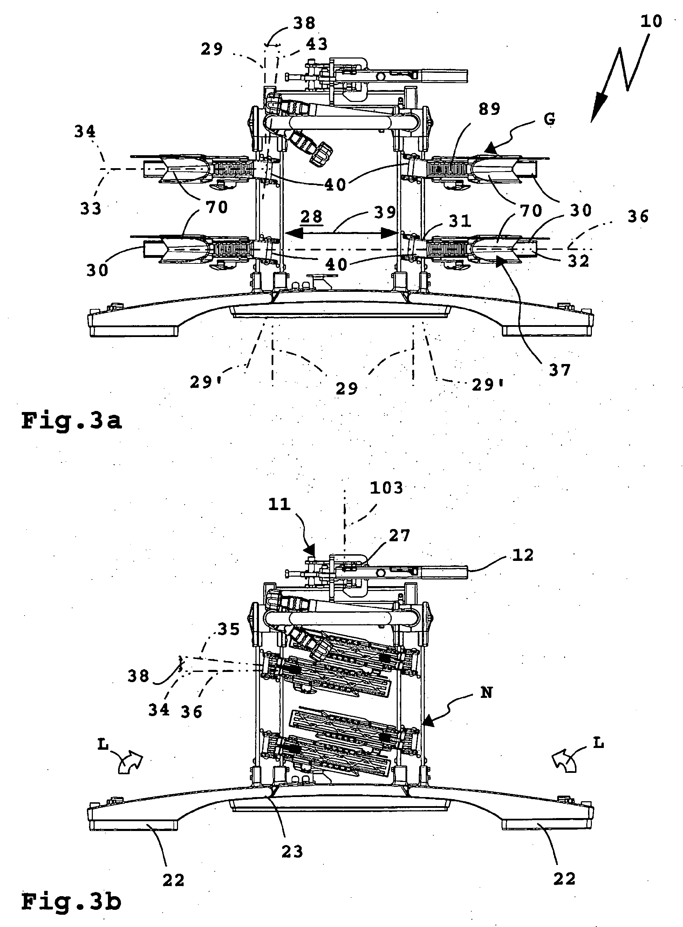

An dem Ladegestell 16, insbesondere dessen Grundschenkel 18, sind ein Kennzeichenträger 21 sowie Leuchten 22 angeordnet. Die Leuchten 22 sind mittels Schwenklagern 23 zu den Längsträgern 19 hin in eine Nichtgebrauchsstellung (Pfeile L in Figur 3b) oder von diesen Längsträgern 19 weg in eine in der Zeichnung dargestellte Gebrauchsstellung schwenkbeweglich, so dass sie etwa mit dem Grundschenkel 18, der den Kennzeichenträger 21 trägt, fluchten.

Im Bereich der freien Enden der Längsträger 19 ist eine Stütze 24 angeordnet, die bei Gebrauch des Lastenträgers 10 wie in Figur 1 dargestellt hoch steht und die Last, beispielsweise ein Fahrrad 90, stützen kann. An der Stütze 24, beispielsweise einem Haltebügel, sind Haltearme 25 beweglich gelagert, an denen sich Klemmen zum Klemmen der Last, beispielsweise eines Rahmens 91 des Fahrrads 90, befinden.

Die Stütze 24 ist zweckmäßigerweise in eine Nichtgebrauchsstellung verlagerbar, bei der sie näher bei den Längsträgern 19 befindlich ist, so dass der Lastenträger 10 bequem verstaut werden kann. Beispielsweise ist die Stütze 24 mit Schwenklagern 26 schwenkbar am Ladegestell 16 gelagert.

Durch die vorgenannten Maßnahmen ist es an sich schon möglich, eine Last, beispielsweise das Fahrrad 90, einigermaßen sicher am Lastenträger 10 zu befestigen. Auch das Verstauen des Lastenträgers 10 fällt leicht, da dessen bei Gebrauch vor das Ladegestell 16 vorstehende Komponenten, beispielsweise die Leuchten 22 und die Stütze 24, bei Nichtgebrauch zum Ladegestell 16 hin verstellbar sind.

An sich ist es auch bekannt, Lasttragteile, beispielsweise Trägerrinnen oder sonstige Trageelemente, zum Tragen der Last, beispielsweise des Fahrrads 90, beweglich am Ladegestell eines Lastenträgers zu lagern.

Bei dem Lastenträger 10 sind jedoch noch weitere Maßnahmen getroffen, die zum einen eine sichere Befestigung der Last am Lastenträger 10 verbessern, zum andern auch dazu beitragen, dass der Lastenträger 10 bei Nichtgebrauch sehr kompakt zusammen gefaltet werden kann, so dass er beispielsweise im Gepäckabteil des Kraftfahrzeugs 100 ohne weiteres abgelegt werden kann.

An dem Grundträger 17 sind mehrere, vorliegend 4, Lasttragteile 30 beweglich gelagert. Beispielsweise sind einander gegenüberliegend an den Längsträgern 19 jeweils zwei Lasttragteile 30 schwenkbeweglich gelagert, wobei jeweils zwei einander gegenüberliegende Lasttragteile 30 ein Lasttragteilpaar 37 bilden. Die Lasttragteile 30 können zwischen die beiden Längsträger 19 hinein geschwenkt werden, so dass sie sich in einem Aufbewahrungsraum 28 befinden. Die beiden Längsträger 19 begrenzen in ihrem Querabstand 39 den Aufbewahrungsraum 28. Die in dem Aufbewahrungsraum 28 befindlichen Lasttragteile 30 nehmen dann ihre Nichtgebrauchsstellung N ein.

Die Lasttragteile 30 sind jedoch nach außen vor die Längsträger 19 vor schwenkbar, so dass sie zum Tragen der Last, beispielsweise dem Fahrrad 90, ihre Gebrauchsstellung G einnehmen.

Die Lasttragteile 30 weisen jeweils einen Lagerabschnitt 31 und einen zum Tragen der Last geeigneten Tragabschnitt 32 auf. Der Tragabschnitt 32 hat eine Längsgestalt und erstreckt sich in einer Längserstreckungsrichtung 33.

Die Längserstreckungsrichtung 33 verläuft entlang einer Gebrauchsstellungsachse 34, wenn die Lasttragteile 30 ihre Gebrauchsstellung G einnehmen. In der Nichtgebrauchsstellung N verlaufen die Tragabschnitte 32 mit ihrer Längserstreckungsrichtung 33 jedoch um einen Schrägstellwinkel 38 schräg zur Gebrauchsstellungsachse 34 und nehmen eine Nichtgebrauchsstellungsachse 35 ein. In der Gebrauchsstellung G fluchten die Lasttragteile 30 derart miteinander, dass ihre jeweiligen Längserstreckungsachsen (in der Längserstreckungsrichtung 33) koaxial sind oder zumindest etwa so parallel verlaufen, dass die Lasttragteile 30 bzw. deren Tragabschnitte 32 entlang einer Querachse 36 verlaufen. Somit können beispielsweise die Räder 92 des Fahrrades 90 auf die Tragabschnitte 32 eines Lasttragteilpaars 37 aufgestellt werden.

Die Lasttragteile 30 sind mittels Schwenklagern 40 schwenkbar an den Längsträgern 19 gelagert. Die Schwenklager 40 umfassen Lagerböcke 41, die nach oben vor die Längsträger 19 vorstehen. Beispielsweise sind an den Längsträgern 19 Durchbrüche 45 vorgesehen, durch die die Lagerböcke 41 nach oben vor die Oberseite der Längsträger 19 vorstehen können. An der Unterseite der Längsträger 19 sind die Lagerböcke 41 entsprechend befestigt, beispielsweise vernietet, verschraubt oder verschweißt.

An den Lagerböcken 41 sind Achselemente 42 gehaltert oder, die durch in der Zeichnung nicht sichtbare Bohrungen oder Durchgangsöffnungen eine den Lagerabschnitten 31 durchgesteckt sind. Selbstverständlich können auch integral an den Lagerabschnitten 31 Achsvorsprünge vorgesehen sein, die in entsprechende Lagerbohrungen an den Lagerböcken 41 schwenkbar aufgenommen sind. an ihren äußeren Enden haben die Achselemente 42 an der Außenseite der Lagerböcke 41 angeordnete Köpfe.

Im Querschnitt sind die Längsträger 19 U-förmig, worauf es jedoch nicht ankommt. Die Durchbrüche 45 sind beispielsweise an oberen Wänden 46 der Längsträger 19 vorgesehen, von denen Seitenschenkel 47 und 48 abstehen. Die Seitenschenkel 47 sind an einander zugewandten Innenseiten der Längsträger 19 vorgesehen, während die Seitenschenkel 48 die Außenseiten der Längsträger 19 bilden.

Die Lasttragteile 30 sind an den Schwenklagern 40 um durch die Achselemente 42 verlaufende Schwenkachsen 43 schwenkbar gelagert. Die Schwenkachsen 43 verlaufen in dem Schrägstellwinkel 38 schrägwinkelig zu Längsachsen 29 der Längsträger 19. Die Längsachsen 29 verlaufen vorzugsweise parallel zu einer Fahrzeuglängsachse 103 des Kraftfahrzeugs 100.

Der Schrägstellwinkel 38 beträgt z.B. 5 bis 15 Grad, zweckmäßigerweise etwa 8 Grad, wobei auch andere Schrägstellwinkel bei erfindungsgemäßen Lastenträgern möglich sind, z.B. 2 bis 45 Grad oder dergleichen.

Es versteht sich, dass auch zueinander winkelige Längsachsen 29' möglich sind, z.B. einem Winkel von 5 bis 15 Grad.

Dennoch ist durch einen zwischen dem Lagerabschnitt 31 und dem Tragabschnitt 32 eines jeweiligen Lasttragteils 30 vorhandenen Winkel, der dem Schrägstellwinkel 38 entspricht, gewährleistet, dass Tragabschnitte 32 in der Gebrauchsstellung G zu den Längsachsen 29 nicht in einem Winkel ungleich 90° zueinander stehen, sondern einen Winkel von 90° zu den Längsachsen 29 haben.

Weiterhin sind die Gebrauchsstellungsachsen 34 in Richtung der Querachse 36 orientiert, das heißt dass die Lasttragteile 30 eines jeweiligen Lasttragteilpaars 37 entlang einer gemeinsamen Querachse 36 in der Gebrauchsstellung G miteinander fluchten.

Die Lasttragteile 30 sind entsprechend einer an sich eigenständigen Erfindung bezüglich des Grundträgers 17 festlegbar, insbesondere verriegelbar. Eine Verriegelungseinrichtung 50 umfasst beispielsweise ein Rastteil 51, das einen Betätigungsschenkel 52 und einen Verriegelungsschenkel 53 mit einem Verriegelungsvorsprung 54 umfasst. Der Verriegelungsvorsprung 54 greift in seiner Verriegelungsstellung in eine Verriegelungsausnehmung 49 am Grundträger 17 ein.

Jedem der Lasttragteile 30 ist eine Verriegelungsausnehmung 49 zugeordnet.

Das Rastteil 51 ist mittels einer Feder 55, beispielsweise einer Schenkelfeder, in Richtung seiner Verriegelungsstellung federbelastet.

Die Rastteile 51 sind um eine Schwenkachse 56 schwenkbar an den Lasttragteilen 30 schwenkbar gelagert.

Die Feder 55 ist einerseits am Rastteil 51 abgestützt, andererseits an dem Grundkörper des Lasttragteils 30. Die Feder 55 belastet das Rastteil 51 derart, dass es um seine Schwenkachse 56 schwenkt und sein Verriegelungsvorsprung 54 in Richtung der Verriegelungsausnehmung 49 federbelastet ist. Wenn also das jeweilige Lasttragteile 30 in Richtung der Gebrauchsstellung G verstellt wird, verrastet das Rastteil 51 automatisch mit dem Grundträger 17.

Die Lasttragteile 30 haben im Bereich ihrer Lagerabschnitte 31 einen vorstehenden, von den Achselementen 42 durchsetzten Tragschenkel 60 sowie einen winkelig nach unten von dem Tragschenkel 60 abstehenden Stützschenkel 61. Der Tragschenkel 60 liegt in der Gebrauchsstellung G auf der Oberseite des Längsträgers 19 auf, also auf der oberen Wand 46, während der Stützschenkel 61 sich seitlich am Längsträger 19, also am Seitenschenkel 48 abstützt.

In den Tragabschnitten 32 ist eine Aufnahme-Ausnehmung für ein jeweiliges Rastteil 51 vorgesehen, beispielsweise in Gestalt eines Schlitzes. Die Rastteile 51 sind etwa quer mittig in den Lasttragteilen 30 schwenkbeweglich aufgenommen. Der Betätigungsschenkel 52 weist beispielsweise eine Druckplatte oder eine sonstige Handhabe auf, die ein Bediener in Richtung des Lasttragteils 30 drückt, um dieses zu entriegeln.

Es versteht sich, dass beispielsweise ein vorzugsweise in Längserstreckungsrichtung 33 orientierter verschiebbarer Riegel oder ein sonstiges Verriegelungsbauteil ohne weiteres ebenfalls zur Verriegelung eines Lasttragteils 30 möglich wäre. Selbstverständlich könnte auch ein Verriegelungselement direkt am Grundgestell des Lastenträgers 10, beispielsweise am Grundträger 17 vorgesehen sein, der das jeweilige Lasttragteile 30 in der Nichtgebrauchsstellung N und/oder der Gebrauchsstellung G verriegeln kann.

Die auf den Lasttragteilen 30 abgestellte Last, beispielsweise das Rad 92, kann mittels Spannelementen 62 verspannt werden, die beispielsweise einen Riemen 63 umfassen, der zugfest mit beispielsweise dem Lagerabschnitt 31 oder, was vorliegend realisiert ist, mit dem Tragabschnitt 32 verbunden ist. Der Riemen 63 ist beispielsweise am dem Lagerabschnitt 31 zugewandten Endbereich des Tragabschnitts 32 festgelegt, vorzugweise mittels eines Schwenklagers. Der Riemen 63 kann um das Rad 92 herum geschlungen werden und ist dann mittels einer Rasthalterung 64 verrastbar. Die Rasthalterung 64 umfasst beispielsweise eine federbelastete Raste 65. Der Riemen 63 weist in an sich bekannter Weise eine Zahnung auf, die mit der Raste 65 verrastbar ist.

Die Spannelemente 62 können ohne weiteres unmittelbar an den Lasttragteilen 30 angeordnet sein, da diese ihrerseits wiederum mit den Verriegelungseinrichtungen 50 in der Gebrauchsstellung G am Grundträger 17 verriegelbar sind. Somit sorgen also die vorgenannten Komponenten (Verriegelungseinrichtung 50 und Spannelemente 62) schon dafür, dass die Last am Lastenträger 10 sicher gehalten wird. Eine weitere Maßnahme zur sicheren Befestigung der Last bilden nachfolgend erläuterte Stützelemente 70.

Die Stützelemente 70 dienen zur Abstützung einer auf dem Lastenträger 10 abgestellten Last. Die Stützelemente 70 sind längsverschieblich, nämlich entlang der Längserstreckungsrichtung 33, an den Lasttragteilen 30 gelagert, so dass sie in eine die jeweilige Last, beispielsweise das Rad 92, optimal abstützende Stellung verstellt werden können. Eine Führungseinrichtung 71 zur Führung der Stützelemente 70 ist als eine lineare Führung ausgestaltet (wobei selbstverständlich auch andere Führungsbahnen möglich sind, beispielsweise gebogene Führungsbahnen).

Die Tragabschnitte 32 sind als Rinnen 73 ausgestaltet, von deren Nutboden oder Grundschenkel 74 zwei seitliche, quasi eine Mulde definierende Seitenschenkel 75 nach oben (bezüglich der Gebrauchsstellung G) abstehen. In die Rinne 73 kann beispielsweise das Rad 92 eingestellt werden, das dann in an sich bekannter Weise von den Seitenschenkeln 75 seitlich abgestützt wird.

Die Seitenschenkel 75 bilden, jedenfalls im Bereich ihrer oberen Stützabschnitte, Führungskonturen 76 der Führungseinrichtung 71. Die Seitenschenkel 75 stehen seitlich vor einen Grundkörper 77 der Tragabschnitte 32 vor, so dass sie von Führungskonturen 78 der Stützelemente 70 umgriffen werden können oder derart in den Führungskonturen 78 aufgenommen sind, dass die Stützelemente quer zu der Längserstreckungsrichtung 33 gegenüber den Lasttragteilen 30 unverlierbar sind.

Die Führungskonturen 78 sind an Seitenabschnitten 79 eines Stützkörpers 72 der Stützelemente 70 ausgebildet. Die Führungskonturen 78 sind einander gegenüberliegend offen. Beispielsweise kann ein Stützelement 70 von den freien Enden der Lasttragteile 30 her auf die Führungskonturen 76 aufgeschoben werden.

Zwischen den Seitenabschnitten 79 des Stützkörpers 72 befindet sich ein Tragabschnitt 80 des Stützkörpers 72. Der Tragabschnitt 80 weist eine Aufnahmemulde 81 zur Aufnahme des Rades 92 auf.

Die Aufnahmemulde 81 ist relativ tief, so dass das Rad 92 weit in die Aufnahmemulde 81 eingreifen kann und durch diese optimal seitlich abgestützt ist. Unterhalb eines Bodens 82 der Aufnahmemulde 81 ist vorzugsweise noch eine Stütze 83 vorgesehen, beispielsweise eine Stützrippe. Es ist vorteilhaft, dass Seitenwände 84 der Aufnahmemulde 81, die sich vom Boden 82 zu den Tragabschnitten 80 hin erstrecken, eine optimale seitliche Abstützung des Rades 92 gewährleisten.

Der Stützkörper 72 ist - wie übrigens auch andere Stützelemente oder Stützkörper eines erfindungsgemäßen Lastenträgers - zweckmäßigerweise im Wesentlichen als ein Hohlkörper ausgebildet, so dass er besonders leicht ist. Selbstverständlich können auch Schlitze oder sonstige Maßnahmen vorgesehen sein, um den Stützkörper 72 noch etwas leichter auszugestalten.

Der Boden 82 der Aufnahmemulde 81 und der Boden der Rinne 73 fluchten miteinander, so dass ein relativ großer Bereich des Außenumfang des Rades 92 abgestützt ist. Der Boden der Rinne 73 verläuft in der Gebrauchsstellung G nach schräg unten außen geneigt. Bereits dadurch erhält das Rad 92 eine gewisse Abstützung von der Seite der Längsträger 19 her gesehen. Zusätzlich kommt noch die Abstützung durch die Aufnahmemulde 81 hinzu. Der Boden der Rinne 73 und der Boden 82 der Aufnahmemulde 81 verlaufen winkelig zueinander, so dass das Rad 92 durch zueinander winkelige Stützflächen (Boden der Rinne 73 und Boden 82 der Aufnahmemulde 81) abgestützt ist.

Zu einem zuverlässigen Halt des Stützelements 70 am Lasttragteil 30 dient eine Halteeinrichtung 85. Die Halteeinrichtung 85 umfasst ein Rastelement 86, das beweglich am Stützelement 70 gelagert ist. Beispielsweise ist das Rastelement 86 in der Art einer Wippe ausgestaltet. Das Rastelement 86 ist mittels eines Schwenklagers 87 zwischen den die Führungskonturen 78 aufweisenden unteren Abschnitten der Seitenabschnitte 79 schwenkbeweglich um eine Schwenkachse quer zur Längserstreckungsrichtung 33, die zugleich die Führungsachse der Führungseinrichtung 71 darstellt, gelagert.

Das Rastelement 86 greift mit einem Rastvorsprung 88 in Zähne einer Zahnreihe 89 ein, die sich zwischen den Seitenschenkeln 75 der Rinne 73 erstreckt. Somit ist es möglich, das Rastelement 86 in unterschiedlichen Längspositionen zu verrasten, so dass der Stützkörper 72 direkt unter einen Außenumfang des Rades 92 geschoben werden kann und dieses Rad 92 optimal stützt. In der jeweiligen Längsposition rastet der Rastvorsprung 88 zwischen Zähne der Zahnreihe 89 ein, so dass das Stützelement 70 bezüglich seiner Längsverschieberichtung ortsfest festgelegt ist.

Eine Neigung der Zähne der Zahnreihe 89 ist dabei so getroffen, dass das Stützelement 70 zum Rad 92 oder in Richtung der freien Enden der Lasttragteile 30 hin ohne zusätzlichen Bedienereingriff hin verschoben werden kann und dort automatisch verrastet. In Gegenrichtung hingegen muss der Bediener eine Bedienhandlung vornehmen, indem er das Rastelement 86 aus der Verrastung mit der Zahnreihe 89 löst. Dazu kann er beispielsweise eine der dem Rastvorsprung 88 entgegengesetzten Seite auf eine Bediener-Vertiefung des Rastelemente 86 drücken, so dass der Rastvorsprung 88 außer Eingriff mit der Zahnreihe 89 gelangt und das Stützelement 70 in einer Richtung von dem freien Ende des Lasttragteils 30 weg, d.h. zum Grundträger 17 hin, verschoben werden kann.

In der Gebrauchsstellung G stehen die Stützelemente 70 relativ weit nach oben vor die Oberseite der Lasttragteile 30 vor. Aufgrund der schrägen Orientierung der Schwenkachsen 43 relativ zu den Längsachsen 29 der Längsträger 19 ist es möglich, die Lasttragteile 30 nebeneinanderliegend und schräg in dem Aufbewahrungsraum 28 unterzubringen, in dem die Stützelemente 70 in der Nichtgebrauchsstellung N nach unten orientiert sind. Die Stützelemente 70 behindern somit das Verstellen der Lasttragteile 30 in die Nichtgebrauchsstellung N nicht.

Das Rastelement 86 ist in seine Raststellung bzw. Verriegelungsstellung federbelastet, beispielsweise durch eine Feder 67. Die Feder 67 ist beispielsweise eine Schenkelfeder, die sich einerseits am Rastelemente 86, andererseits am Stützkörper 72 abstützt.

## Patentansprüche

1. Lastenträger für ein Kraftfahrzeug (100), insbesondere einen Personenkraftwagen, mit einem zum Tragen einer Last (90) vorgesehenen Grundträger (17), der bei Gebrauch des Lastenträgers (10) nach hinten vor einen Heckbereich des Kraftfahrzeugs (100) vorsteht, wobei an dem Grundträger (17) mindestens zwei eine Längserstreckungsrichtung (33) aufweisende Lasttragteile (30), insbesondere in Gestalt von langgestreckten Fahrradträgerteilen zum Abstellen eines Fahrrads (90), ein Lasttragteilpaar (37) bilden, wobei die Lasttragteile (30) jeweils einen Tragabschnitt (32) und einen Lagerabschnitt (31) aufweisen, wobei die Lasttragteile (30) mit ihren Lagerabschnitten (31) an dem Grundträger (17) in einem Querabstand (39) zueinander mittels Schwenklagern (40) schwenkbar zwischen einer Nichtgebrauchsstellung (N), in der die Lasttragteile (30) in einen in dem Querabstand (39) vorhandenen Aufbewahrungsraum (28) geschwenkt sind, und einer Gebrauchsstellung (G) gelagert sind, in der die Lasttragteile (30) aus dem Aufbewahrungsraum (28) zur Vergrößerung des Ladebereichs heraus geschwenkt sind, **dadurch gekennzeichnet, dass** der Tragabschnitt (32) mindestens eines der Lasttragteile (30) in der Nichtgebrauchsstellung (N) in dem Aufbewahrungsraum (28) in einer Schräglage bezüglich der Gebrauchsstellung (G) angeordnet ist und in seiner Längserstreckungsrichtung (33) in einer Nichtgebrauchsstellungsachse (35) orientiert ist, die um einen Schrägstellwinkel (38) gegenüber einer Gebrauchsstellungsachse (34) winkelig ist, in der die Längserstreckungsrichtung (33) des Tragabschnitts (32) in der Gebrauchsstellung (G) orientiert ist.

2. Lastenträger nach Anspruch 1, **dadurch gekennzeichnet, dass** der Tragabschnitt (32) und der Lagerabschnitt (31) gegensinnig zu dem Schrägstellwinkel (38) zueinander winkelig sind.

3. Lastenträger nach Anspruch 1 oder 2, **dadurch gekennzeichnet, dass** die Lasttragteile (30) in der Gebrauchsstellung (G) und in der Nichtgebrauchsstellung (N) etwa in derselben Ebene liegen und/oder die Nichtgebrauchsstellungsachse (35) und die Gebrauchsstellungsachse (34) in derselben Ebene liegen.

4. Lastenträger nach einem der vorhergehenden Ansprüche, **dadurch gekennzeichnet, dass** sich die Tragabschnitte (32) eines jeweiligen Lasttragteilpaars (37), insbesondere miteinander fluchtend, entlang einer Querachse (36) erstrecken, wobei der Tragabschnitt (32) mindestens eines der Lasttragteile (30) in der Nichtgebrauchsstellung (N) in dem Aufbewahrungsraum (28) schräg angeordnet ist und seine Längsachse in einem schrägen Winkel zu der Querachse (36) verläuft

5. Lastenträger nach einem der vorhergehenden Ansprüche, **dadurch gekennzeichnet, dass** die Schwenkachse (43) mindestens eines Schwenklagers (40) in einem Winkel von mehr als 90° zu der Querachse (36) und/oder zur Gebrauchsstellungsachse (34) des Tragabschnitts (32) verläuft.

6. Lastenträger nach einem der vorhergehenden Ansprüche, **dadurch gekennzeichnet, dass** die Tragabschnitte (32) der Lasttragteile (30) eines Lasttragteilpaars (37) in der Nichtgebrauchsstellung (N) insbesondere parallel nebeneinander in dem Aufbewahrungsraum (28) zu liegen kommen.

7. Lastenträger nach einem der vorhergehenden Ansprüche, **dadurch gekennzeichnet, dass** sich die Tragabschnitte (32) der Lasttragteile (30) eines Lasttragteilpaars (37) in der Nichtgebrauchsstellung (N) in dem Aufbewahrungsraum (28) überkreuzen.

8. Lastenträger nach einem der vorhergehenden Ansprüche, **dadurch gekennzeichnet, dass** die Schwenkachsen (43) der Lasttragteile (30) eines Lasttragteilpaars (37) parallel zueinander verlaufen.

9. Lastenträger nach einem der vorhergehenden Ansprüche, **dadurch gekennzeichnet, dass** der Grundträger (17) als ein Ladegestell (16) ausgestaltet ist und die Schwenklager (40) der Lasttragteile (30) an insbesondere parallel nebeneinander verlaufenden, den Aufbewahrungsraum (28) seitlich begrenzenden Längsträgern (19) angeordnet sind.

10. Lastenträger nach einem der vorhergehenden Ansprüche, **dadurch gekennzeichnet, dass** die Längsachsen der Längsträger (19) parallel zueinander und rechtwinkelig quer zu einer die Lasttragteile (30) in der Gebrauchsstellung (G) durchsetzenden Querachse (36) oder der Gebrauchsstellungsachse (34) des Tragabschnitts (32) verlaufen und/oder dass die Längsachsen der Längsträger (19) parallel zu einer Fahrzeuglängsrichtung des Kraftfahrzeugs (100) bei Gebrauch des Lastenträgers (10) an dem Kraftfahrzeug (100) verlaufen.

11. Lastenträger nach einem der vorhergehenden Ansprüche, **dadurch gekennzeichnet, dass** er eine Verriegelungseinrichtung zur Verriegelung mindestens eines Lasttragteils (30) in der Gebrauchsstellung (G) und/oder der Nichtgebrauchsstellung (N) an dem Grundträger (17) aufweist.

12. Lastenträger nach einem der vorhergehenden Ansprüche, **dadurch gekennzeichnet, dass** die Verriegelungseinrichtung ein in Richtung seiner das Lasttragteil (30) bezüglich des Grundträgers (17) verriegelnden Verriegelungsstellung federbelastetes Riegelelement aufweist.

13. Lastenträger nach Anspruch 12, **dadurch gekennzeichnet, dass** das Riegelelement an dem Lasttragteil (30), insbesondere an dessen Lagerabschnitt (31), beweglich gelagert ist.

14. Lastenträger nach einem der vorhergehenden Ansprüche, **dadurch gekennzeichnet, dass** an dem Tragabschnitt (32) ein Stützelement (70) zum Abstützen der Last, insbesondere eines Rades eines Fahrrades (90), mittels einer Führungseinrichtung (71) entlang der Längsachsrichtung verschieblich geführt ist, so dass das Stützelement (70) in eine zum Abstützen der Last (90) geeignete Längsposition entlang der Längserstreckungsrichtung verstellbar ist.

15. Lastenträger nach Anspruch 14, **dadurch gekennzeichnet, dass** das Stützelement (70) mittels einer Halteeinrichtung (85) an dem Lasttragteil (30) in unterschiedlichen Längspositionen bezüglich der Längsachsrichtung des Tragabschnitts (32) festlegbar ist.

## Claims

1. Load carrier for a motor vehicle (100), in particular a car, with a base support (17) provided for carrying a load (90) and which, in use of the load carrier (10), extends rearwards beyond a rear section of the motor vehicle (100), wherein on the base support (17) at least two load carrying parts (30) with a direction of longitudinal extent (33), in particular in the form of elongated cycle carrying parts for the stowing of a cycle (90), form a load carrying part pair (37), wherein each of the load carrying parts (30) has a carrying section (32) and a bearing section (31), wherein the load carrying parts (30) are mounted with their bearing sections (31) on the base support (17) in a lateral space (39), pivotable towards one another by means of swivel bearings (40) between an inoperative position (N) in which the load carrying parts (30) are swung into a storage space (28) available in the lateral space (39), and a position of use (G) in which the load carrying parts (30) are swung out of the storage space (28) to increase the loading area, **characterised in that** the carrying section (32) of at least one of the load carrying parts (30) is located in the inoperative position (N) in the storage space (28) in an inclined position relative to the position of use (G), and in its direction of longitudinal extent (33) is oriented on an inoperative position axis (35) which is angled around a tilt angle (38) relative to a position of use axis (34) in which the direction of longitudinal extent (33) of the carrying section (32) is oriented in the position of use (G).

2. Load carrier according to claim 1, **characterised in that** the carrying section (32) and the bearing section (31) are at an angle to one another opposite to the tilt angle (38).

3. Load carrier according to claim 1 or 2, **characterised in that** the load carrying parts (30) in the position of use (G) and in the inoperative position (N) lie in approximately the same plane and/or the inoperative position axis (35) and the position of use angle (34) lie in the same plane.

4. Load carrier according to any of the preceding claims, **characterised in that** the carrying sections (32) of each load carrying part pair (37) extend along a lateral axis (36), in particular flush with one another, wherein the carrying section (32) of at least one of the load carrying parts (30) in the inoperative position (N) is mounted at an angle in the storage space (28), and its longitudinal axis runs at an inclined angle to the lateral axis (36).

5. Load carrier according to any of the preceding claims, **characterised in that** the swivel axis (43) of at least one swivel bearing (40) runs at an angle of more than 90° to the lateral axis (36) and/or to the position of use axis (34) of the carrying section (32).

6. Load carrier according to any of the preceding claims, **characterised in that** the carrying sections (32) of the load carrying parts (30) of a load carrying part pair (37) in the inoperative position (N) come to lie in particular parallel alongside one another in the storage space (28).

7. Load carrier according to any of the preceding claims, **characterised in that** the carrying sections (32) of the load carrying parts (30) of a load carrying part pair (37) in the inoperative position (N) intersect in the storage space (28).

8. Load carrier according to any of the preceding claims, **characterised in that** the swivel axes (43) of the load carrying parts (30) of a load carrying part pair (37) run parallel to one another.

9. Load carrier according to any of the preceding claims, **characterised in that** the base support (17) is designed as a loading rack (16) and the swivel bearings (40) of the load carrying parts (30) are mounted on longitudinal members (19), in particular running parallel alongside one another and bounding the storage space (28) at the side.

10. Load carrier according to any of the preceding claims, **characterised in that** the longitudinal axes of the longitudinal members (19) run parallel to one another and at right-angles transversely to a lateral axis (36) passing through the load carrying parts (30) in the position of use (G) or the position of use axis (34) of the carrying section (32), and/or that the longitudinal axes of the longitudinal members (19) run parallel to a vehicle axial direction of the motor vehicle (100) when the load carrier (10) is used on the motor vehicle (100).

11. Load carrier according to any of the preceding claims, **characterised in that** it has a locking device for locking at least one load carrying part (30) to the base support (17) in the position of use (G) and/or the inoperative position (N).

12. Load carrier according to any of the preceding claims, **characterised in that** the locking device has a spring-loaded sliding bolt element in the direction of its locking position in which it locks the load carrying part (30) to the base support (17).

13. Load carrier according to claim 12, **characterised in that** the sliding bolt element is movably mounted on the load carrying part (30), in particular on its bearing section (31).

14. Load carrier according to any of the preceding claims, **characterised in that** on the carrying section (32) a support element (70) to support the load, in particular a wheel of a cycle (90), is movably guided along by means of a guide fixture (71) in the longitudinal axis direction, so that the support element (70) is adjustable along the longitudinal axis direction into an axial position suitable for supporting the load (90).

15. Load carrier according to claim 14, **characterised in that** the support element (70) may be fixed by means of a holding fixture (85) on the load carrying part (30) in different axial positions relative to the longitudinal axis direction of the carrying section (32).

## Revendications

1. Support de charges pour un véhicule automobile (100), en particulier pour une voiture particulière, comprenant un support de base (17) prévu pour supporter une charge (90), lequel support de base fait saillie, lors de l'utilisation du support de charges (10), vers l'arrière d'une partie arrière du véhicule automobile (100), sachant qu'au moins deux parties de support de charges (30) présentant un sens d'extension longitudinale (33), en particulier sous la forme de parties de support allongées de bicyclette servant à y déposer une bicyclette (90) forment, au niveau du support de base (17), une paire de parties de support de charges (37), sachant que les parties de support de charges (30) présentent respectivement une section de support (32) et une section de palier (31), sachant que les parties de support de charges (30) sont logées par leurs sections de palier (31), au niveau du support de base (17) selon une distance transversale (39) les unes par rapport aux autres, de manière à pouvoir pivoter, au moyen de paliers de pivotement (40), entre une position de non utilisation (N), dans laquelle les parties de support de charges (30) sont pivotées dans un espace de rangement (28) présent selon une distance transversale (39), et une position d'utilisation (G), dans laquelle les parties de support de charge (30) sont sorties par pivotement de l'espace de rangement (28) aux fins de l'agrandissement de la zone de chargement, **caractérisé en ce que** la section de support (32) au moins d'une des parties de support de charges (30) est disposée, dans la position de non-utilisation (N), dans l'espace de rangement (28) dans une position inclinée par rapport à la position d'utilisation (G) et est orientée, dans son sens d'extension longitudinale (33), dans un axe de position de non utilisation (35), qui forme un angle par rapport à un axe de position d'utilisation (34) selon un angle d'inclinaison (38), dans lequel le sens d'extension longitudinale (33) de la section de support (32) est orienté dans la position d'utilisation (G).

2. Support de charges selon la revendication 1, **caractérisé en ce que** la section de support (32) et la section de palier (31) forment un angle l'une par rapport à l'autre en sens contraire par rapport à l'angle d'inclinaison (38).

3. Support de charges selon la revendication 1 ou 2, **caractérisé en ce que** les parties de support de charges (30) se trouvent, dans la position d'utilisation (G) et dans la position de non utilisation (N), approximativement dans le même plan, et/ou **en ce que** l'axe de position de non utilisation (35) et l'axe de position d'utilisation (34) se trouvent dans le même plan.

4. Support de charges selon l'une quelconque des revendications précédentes, **caractérisé en ce que** les sections de support (32) d'une paire de parties de support de charges (37) respective s'étendent le long d'un axe transversal (36), en étant en particulier alignées les unes avec les autres, sachant que la section de support (32) au moins d'une des parties de support de charges (30) est disposée de manière inclinée dans l'espace de rangement (28) dans la position de non utilisation (N), et sachant que son axe longitudinal s'étend selon un angle d'inclinaison par rapport à l'axe transversal (36).

5. Support de charges selon l'une quelconque des revendications précédentes, **caractérisé en ce que** l'axe de pivotement (43) au moins d'un palier de pivotement (40) s'étend selon un angle de plus de 90° par rapport à l'axe transversal (36) et/ou par rapport à l'axe de position d'utilisation (34) de la section de support (32).

6. Support de charges selon l'une quelconque des revendications précédentes, **caractérisé en ce que** les sections de support (32) des parties de support de charges (30) d'une paire de parties de support de charges (37) viennent se placer dans la position de non utilisation (N) en particulier de manière parallèle les unes à côté des autres dans l'espace de rangement (28).

7. Support de charges selon l'une quelconque des revendications précédentes, **caractérisé en ce que** les sections de support (32) des parties de support de charge (30) d'une paire de parties de support de charges (37) se croisent dans l'espace de rangement (28) dans la position de non utilisation (N).

8. Support de charges selon l'une quelconque des revendications précédentes, **caractérisé en ce que** les axes de pivotement (43) des parties de support de charges (30) d'une paire de parties de support de charges (37) s'étendent de manière parallèle les uns par rapport aux autres.

9. Support de charges selon l'une quelconque des revendications précédentes, **caractérisé en ce que** le support de base (17) est configuré sous la forme d'un châssis de chargement (16), et **en ce que** les paliers de pivotement (40) des parties de support de charges (30) sont disposés au niveau des supports longitudinaux (19) s'étendant en particulier de manière parallèle les uns par rapport aux autres, délimitant sur les côtés l'espace de rangement (28).

10. Support de charges selon l'une quelconque des revendications précédentes, **caractérisé en ce que** les axes longitudinaux des supports longitudinaux (19) s'étendent de manière parallèle les uns par rapport aux autres et de manière à former un angle droit de manière transversale par rapport à un axe transversal (36) traversant les parties de support de charges (30) dans la position d'utilisation (G) ou par rapport à l'axe de position d'utilisation (34) de la section de support (32), et/ou **en ce que** les axes longitudinaux des supports de charges (19) s'étendent de manière parallèle par rapport à un sens longitudinal de véhicule du véhicule automobile (100) lorsque le support de charges (10) est utilisé sur le véhicule automobile (100).

11. Support de charges selon l'une quelconque des revendications précédentes, **caractérisé en ce qu'**il présente un dispositif de verrouillage servant à verrouiller au moins une partie de support de charges (30) dans la position d'utilisation (G) et/ou dans la position, de non utilisation (N) au niveau du support de base (17).

12. Support de charges selon l'une quelconque des revendications précédentes, **caractérisé en ce que** le dispositif de verrouillage présente un élément verrou soumis à l'action élastique des ressorts en direction de sa position de verrouillage verrouillant la partie de support de charges (30) par rapport au support de base (17).

13. Support de charges selon la revendication 12, **caractérisé en ce que** l'élément verrou est logé de manière mobile au niveau de la partie de support de charges (30), en particulier au niveau de la section de palier (31) de cette dernière.

14. Support de charges selon l'une quelconque des revendications précédentes, **caractérisé en ce qu'**un élément de soutien (70) servant à soutenir la charge, en particulier une roue d'une bicyclette (90), est guidé, au niveau de la section de support (32), de manière à coulisser au moyen d'un dispositif de guidage (71) le long de la direction d'axe longitudinal de sorte que l'élément de soutien (70) peut être déplacé le long du sens d'extension longitudinale dans une position longitudinale appropriée pour soutenir la charge (90).

15. Support de charges selon la revendication 14, **caractérisé en ce que** l'élément de soutien (70) peut être fixé au moyen d'un dispositif de maintien (85) au niveau de la partie de support de charges (30) dans diverses positions longitudinales par rapport à la direction d'axe longitudinal de la section de support (32).
